# EUROPEAN PATENT APPLICATION

(11) **EP 3 677 516 A1**
(43) Date of publication of application: **08.07.2020**
(21) Application number: 17923449.7
(22) Date of filing: 31.08.2017
(51) Int. Cl.: B64D 47/08, F16F 15/023, F16D 9/10

(54) **VIBRATION REDUCTION DEVICE AND CRADLE HEAD SYSTEM**

(71) Applicant: SZ DJI Osmo Technology Co., Ltd., Shenzhen, Guangdong 518057 (CN)
(72) Inventor: CHEN, Zihan, Shenzhen Guangdong 518057 (CN); YANG, Jian, Shenzhen Guangdong 518057 (CN)
(74) Representative: Appelt, Christian W.
(86) International application number: PCT/CN2017/099933
(87) International publication number: WO 2019/041232

(57) **Abstract**

The present disclosure provides a vibration reduction device and a gimbal system. The vibration reduction device includes a counterweight component, a bracket, and a damping material. The bracket is mounted at the gimbal. The counterweight component is movably connected to the bracket. When the bracket is subject to vibration, the counterweight component and the bracket move relative to each other to drive the damping material between the counterweight component and the bracket to flow.

## Description

### COPYRIGHT NOTICE

The disclosure of this patent document contains material which is subject to copyright protection. The copyright owner reserves all copyright rights. The copyright owner has no objection to the facsimile reproduction by anyone of the patent document or the patent disclosure, as it appears in the Patent and Trademark Office patent file or records.

### TECHNICAL FIELD

The present disclosure relates to a gimbal photographing technology field and, more particularly, to a vibration reduction device and a gimbal system.

### BACKGROUND

A gimbal is a supporting device to fix an image acquisition device such as a camera, a video recorder, etc., and is used to improve a stability of the image acquisition device. The gimbal has a multi-frame tandem structure and has many vibration modes (i.e., resonance points). A mechanical response of the gimbal is quite different from a theoretical rigid body response due to the existing vibration modes, which leads to a difficulty in control design. These vibration modes also cause the mechanical system to multiply an interference on the gimbal when an external disturbance is near a modal frequency, so that the vibration of the gimbal increases and photographing quality of the image acquisition devices is affected.

### SUMMARY

To solve at least one aspect of the above-noted problems, the present disclosure provides a vibration reduction device. The vibration reduction device not only has a simple structure, but also achieves a better vibration reduction.

In accordance with a first aspect of the disclosure, there is provided a vibration reduction device for the gimbal including a counterweight component, a bracket, and a damping material, where the bracket is mounted at the gimbal, the counterweight component is connected movably to the bracket. When the bracket is subject to vibration, the counterweight component moves relative to the bracket to drive the damping material between the counterweight component and the bracket to flow.

In accordance with some embodiments, the bracket is mounted at a yaw axis arm of the gimbal.

In accordance with some embodiments, the bracket is mounted at an end of the yaw axis arm away from a roll axis arm of the gimbal.

In accordance with some embodiments, the damping material includes damping grease.

In accordance with some embodiments, the vibration reduction device further includes a gap maintaining component, where the bracket includes at least one first movement plane, the counterweight component includes at least one second movement plane, the gap maintaining component allows the first movement plane of the bracket to move relative to the second movement plane of the counterweight component with a pre-set gap.

In accordance with some embodiments, the gap maintaining component is a rolling component or an elastic component.

In accordance with some embodiments, when the gap maintaining component is the rolling component, a mounting slot to accommodate the rolling component is formed at the at least one first movement plane of the bracket and/or the at least one second movement plane of the counterweight component.

In accordance with some embodiments, the rolling component includes at least one of a ball, a needle, or a roller.

In accordance with some embodiments, the damping material is between the first movement plane of the bracket and the second movement plane of the counterweight component.

In accordance with some embodiments, the bracket includes at least one protrusion, the counterweight component is provided with a chamber, and the chamber accommodates at least one part of the protrusion, where the first movement plane is formed at the protrusion of the bracket, the second movement plane is formed at the inner wall of the chamber of the counterweight component. The gap maintaining component allows the first movement plane formed at the protrusion component to move relative to the second movement plane formed at the inner wall of the chamber with the pre-set gap.

In accordance with some embodiments, the counterweight component includes a first counterweight member and a second counterweight member, where the first counterweight member is connected to the second counterweight member to form the chamber.

In accordance with some embodiments, the bracket includes a mounting member connected to the protrusion, the bracket is mounted at the gimbal through the mounting member.

In accordance with some embodiments, the bracket is configured with a receiving chamber and the receiving chamber receives at least a part of the counterweight component, where the first movement plane is formed at the inner wall of the receiving chamber of the bracket, and the gap maintaining component allows the first movement plane formed at the inner wall of the receiving chamber to move relative to the second movement plane formed at the counterweight component with the pre-set gap.

In accordance with some embodiments, the counterweight component is sealed and accommodated in the receiving chamber.

In accordance with some embodiments, the bracket includes a first cover and a second cover, and the first cover and the second cover are connected to form the receiving chamber.

In accordance with some embodiments, the bracket includes a mounting member, the second cover further includes at least one support arm, the support arm is connected to the mounting member. The bracket is mounted at the gimbal through the mounting member.

In accordance with some embodiments, the bracket further includes a lock member, the lock member is configured to lock the mounting member on the gimbal.

In accordance with some embodiments, the vibration reduction device includes a plurality of counterweight components.

In accordance with some embodiments, the plurality of counterweight components are symmetrically distributed and movably connected to the bracket.

In accordance with some embodiments, the damping material is only filled in the gap between the first movement plane and the second movement plane.

In accordance with a second aspect of the present disclosure, there is provided a gimbal system. The gimbal system includes a gimbal and a vibration reduction device. The gimbal includes a yaw axis arm and a load support component. The load support component is arranged at an end of the yaw axis arm, and the vibration reduction device arranged at the other end of the yaw axis arm away from the load support component.

In accordance with some embodiments, the vibration reduction device is configured to absorb or reduce the vibration of the yaw axis arm.

In accordance with some embodiments, the load support component includes at least one of a roll axis arm or a pitch axis arm connected to the roll axis arm.

In accordance with some embodiments, the vibration reduction device includes a counterweight component, a bracket, and a damping material, where the bracket is mounted at the gimbal, and the counterweight component is movably connected to the bracket. When the bracket is subject to vibration, the counterweight component moves relative to the bracket to drive the damping material between the counterweight component and the bracket to flow.

In accordance with some embodiments, the damping material includes damping grease.

In accordance with some embodiments, the vibration reduction device includes a gap maintaining component, where the bracket includes at least one first movement plane, and the counterweight component includes at least one second movement plane. The gap maintaining component allows the first movement plane of the bracket to move relative to the second movement plane of the counterweight component with a pre-set gap.

In accordance with some embodiments, the gap maintaining component is a rolling component or an elastic component.

In accordance with some embodiments, when the gap maintaining component is the rolling component, a mounting slot is configured at the at least one first movement plane of the bracket and/or the at least one second movement plane of the counterweight component to accommodate the rolling component.

In accordance with some embodiments, the rolling component includes at least one of a ball, a needle, or a roller.

In accordance with some embodiments, the damping material is between the first movement plane of the bracket and the second movement plane of the counterweight component.

In accordance with some embodiments, the bracket includes at least one protrusion, the counterweight component is provided with a chamber, the chamber accommodates at least a part of the protrusion, where the first movement plane is formed at the protrusion of the bracket and the second movement plane is formed at the inner wall of the chamber of the counterweight component. The gap maintaining component allows the first movement plane formed at the protrusion to move relative to the second movement plane formed at the inner wall of the chamber with the pre-set gap.

In accordance with some embodiments, the counterweight component includes the first counterweight member and the second counterweight member, where the first counterweight member and the second counterweight member are connected to form the chamber.

In accordance with some embodiments, the bracket includes a mounting member connected to the protrusion, the bracket is mounted at the gimbal through the mounting member.

In accordance with some embodiments, the bracket is configured with a receiving chamber, the receiving chamber accommodates at least a part of the counterweight component, where the first movement plane is formed at the protrusion of the bracket, the gap maintaining component allows the first movement plane formed at the protrusion to move relative to the second movement plane formed at the inner wall of the receiving chamber with the pre-set gap.

In accordance with some embodiments, the counterweight component is sealed and accommodated in the receiving chamber.

In accordance with some embodiments, the bracket includes a first cover and a second cover, where the first cover and the second cover are connected to form the receiving chamber.

In accordance with some embodiments, the bracket includes a mounting member, the second cover further includes at least one support arm, the support arm is connected to the mounting member, and the bracket is mounted at the gimbal through the mounting member.

In accordance with some embodiments, the bracket further includes a lock member, and the lock member is configured to lock the mounting member to the gimbal.

In accordance with some embodiments, the vibration reduction device includes a plurality of counterweight components.

In accordance with some embodiments, the plurality of counterweight components are symmetrically distributed and movably connected to the bracket.

In accordance with some embodiments, the damping material is merely filled in the gap between the first movement plane and the second movement plane.

In accordance with some embodiments, the gimbal system includes at least two vibration reduction devices, at least one of the at least two vibration reduction devices is mounted at the yaw axis arm of the gimbal.

In accordance with some embodiments, the gimbal system includes three vibration reduction devices, and the three vibration reduction devices are mounted at the yaw axis arm, the roll axis arm, and the pitch axis arm of the gimbal, respectively.

In accordance with a third aspect of the present disclosure, there is provided a vibration reduction device including a counterweight component, a bracket, and a damping material, where the bracket is mounted at a vibrating component, and the counterweight component is movably connected to the bracket. When the bracket is subject to vibration, the counterweight component moves relative to the bracket to drive the damping material between the counterweight component and the bracket to flow.

In accordance with some embodiments, the damping material includes a damping grease.

In accordance with some embodiments, the vibration reduction device further includes a gap maintaining component, where the bracket includes at least one first movement plane, the counterweight component includes at least one second movement plane, and the gap maintaining component allows the first movement plane of the bracket to move relative to the second movement plane of the counterweight component.

In accordance with some embodiments, the gap maintaining component is a rolling component or an elastic component.

In accordance with some embodiments, when the gap maintaining component is the rolling component, the mounting slot is configured at the at least one first movement plane of the bracket and/or the at least one second movement plane of the counterweight component to accommodate the rolling component.

In accordance with some embodiments, the rolling component includes at least one of a ball, a needle, or a roller.

In accordance with some embodiments, the damping material is arranged between the first movement plane of the bracket and the second movement plane of the counterweight component.

In accordance with some embodiments, the bracket includes at least one protrusion, the counterweight component is provided with a chamber, the chamber accommodates at least a part of the protrusion, where the first movement plane is formed at the protrusion of the bracket, the second movement plane is formed at the inner wall of the chamber of the counterweight component, and the gap maintaining component allows the first movement plane formed at the protrusion to move relative to the second movement plane formed at the inner wall of the chamber with a pre-set gap.

In accordance with some embodiments, the counterweight component includes a first counterweight member and a second counterweight member, where the first counterweight member and the second counterweight member are connected to form the chamber.

In accordance with some embodiments, the bracket includes a mounting member connected to the protrusion, the bracket is mounted at the vibrating component through the mounting member.

In accordance with some embodiments, the bracket is provided with a receiving chamber, the receiving chamber accommodates at least a part of the counterweight component, where the first movement plane is formed at the inner wall of the receiving chamber of the bracket, the gap maintaining component allows the first movement plane formed at the inner wall of the receiving chamber to move relative to the second movement plane formed at the counterweight component with the pre-set gap.

In accordance with some embodiments, the counterweight component is sealed and accommodated in the receiving chamber.

In accordance with some embodiments, the bracket includes a first cover and a second cover, where the first cover and the second cover are connected to form the receiving chamber.

In accordance with some embodiments, the bracket includes the mounting member, the second cover further includes at least a support arm, the support arm is connected to the mounting member, the bracket is mounted at the vibrating component through the mounting member.

In accordance with some embodiments, the bracket further includes a lock member, the lock member is configured to lock the mounting member at the vibrating component.

In accordance with some embodiments, the vibration reduction device includes the plurality of counterweight components.

In accordance with some embodiments, the plurality of counterweight components are symmetrically distributed and movably connected to the bracket.

In accordance with some embodiments, the damping material is merely filled in the gap between the first movement plane and the second movement plane.

With the vibration reduction device in the embodiments of the present disclosure, not only the structure of the vibration reduction device is simplified, but also vibration amplitudes of the plurality of vibration modes can be reduced or eliminated in a wide frequency range for a better vibration reduction.

### BRIEF DESCRIPTION OF THE DRAWINGS

To more clearly describe the technical solution in embodiments of the present disclosure, drawings used in the description of the embodiments are briefly described below. Apparently, the following described drawings are some embodiments of the present disclosure. Other reference drawings may be obtained by one of ordinary skill in the art without any creative effort based on these reference drawings.
FIG. 1 is a schematic perspective view of a vibration reduction device according to an embodiment of the disclosure.
FIG. 2 is a sectional view of the vibration reduction device shown in FIG. 1.
FIG. 3 is a partial schematic diagram showing a bracket of the vibration reduction device shown in FIG. 1.
FIG. 4(a) and FIG. 4(b) are schematic views showing optional distribution manners of counterweight components.
FIG. 5 is a schematic perspective view of the vibration reduction device according to another embodiment of the disclosure.
FIG. 6 is a schematic perspective view of the vibration reduction device shown in FIG. 5, where a part of an inner structure is shown.
FIG. 7 is a partial sectional view of the vibration reduction device shown in FIG. 5.
FIG. 8 is the plan view of the vibration reduction device shown in FIG. 7.
FIG. 9 is a schematic perspective view of a gimbal mounted with the vibration reduction device according to an embodiment of the present disclosure.
FIG. 10 is a schematic perspective view of the gimbal mounted with the vibration reduction device according to another embodiment of the present disclosure.

In addition, the respective figures are not necessarily drawn to scale, but are shown illustratively in a manner that does not affect the reader's understanding.

### DETAILED DESCRIPTION OF THE EMBODIMENTS

The embodiments of the present disclosure are described in detail in connection with the drawings. Other aspects, advantages, and prominent features of the present disclosure are apparent to one of ordinary skill in the art.

In the present disclosure, the following various embodiments describing the principles of the present disclosure are only illustrative, and should not be construed as limiting the scope of the present disclosure in any way. The following description with reference to the accompanying drawings is used to assist in a comprehensive understanding of example embodiments of the present disclosure as defined by the claims and their equivalents. The following description includes a plurality of specific details to help understand, and these details should be only construed as illustrative. One of ordinary skill in the art should realize that the described embodiments may be changed or modified without departing from the scope and spirit of the present disclosure. In addition, the description of the well-known functions and structures is omitted for clarity and simplicity. The same reference numerals are used for the same or similar functions and operations throughout the drawings. Although schemes with different features are described in different embodiments, those of ordinary skill in the art should understand that all or a part of features of different embodiments may be combined to form new embodiments without departing from the spirit and scope of this disclosure.

One of ordinary skill in the art should understand, "vibration mode" is an inherent vibration characteristic of a structure or a component, and each mode has a specific natural frequency, a damping ratio, and a modal shape. When a vibration frequency of an external vibration or a vibration frequency of an excitation vibration is equal to the natural frequency of the structure or the component, a resonance will happen. An amplitude is amplified during the resonance. In this context, the amplitude at which the structure or the component resonates is described as a "resonant amplitude."

In the context, "broadband" or "broadband range" indicate a frequency range formed by natural frequencies of a plurality of vibration modes, rather than a single natural frequency of a certain vibration mode.

In the present disclosure, a "movement plane" of a component indicates a plane of the component moving relative to an adjacent component.

In the context, when describing a vibration reduction device, X-Y-Z coordinate system is established to describe different directions. The directional expression is for convenience of description only, rather than for restriction of the embodiments in the present disclosure. X direction, Y direction and Z direction may be any directions, as long as they are perpendicular to each other. For example, when the vibration reduction device is mounted at a gimbal, X direction may be parallel to the pitch axis of the gimbal, Y direction may be parallel to the roll axis of the gimbal, and Z direction may be parallel to the yaw axis of the gimbal.

The technology described in the present disclosure may be implemented on a gimbal. Generally, the gimbal can be configured to carry a load, such as an imaging device. The imaging device may be a camera, a video recorder, or a lens, etc. The gimbal may be mounted at a moving object, for example, an unmanned aerial vehicle (UAV), a movable rail car, or an unmanned vehicle. When the gimbal is held by a user, the gimbal becomes a handheld device.

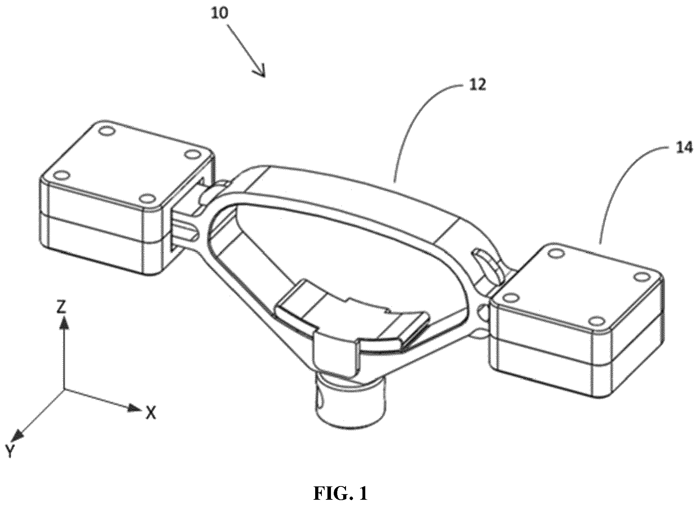

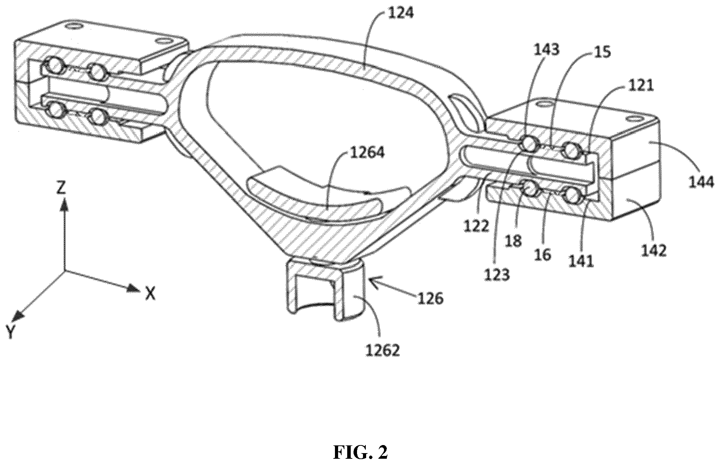

Refer to FIG. 1 and FIG. 2, which show schematic diagrams of a vibration reduction device 10 according to an example embodiment of the present disclosure. The vibration reduction device 10 includes a bracket 12, a counterweight component 14, and a damping material 16. The bracket 12 may be mounted at any vibrating component, where the vibrating component is a component which may cause vibration or be interfered by vibration. The counterweight component 14 is movably connected to the bracket 12. When the bracket is subject to vibration 12, the counterweight component 14 can move relative to the bracket 12 to drive the damping material 16 between the counterweight component 14 and the bracket 12 to flow.

In the embodiments, when the vibration reduction device 10 is mounted at the vibrating component, for example, when the bracket 12 of the vibration reduction device 10 is mounted at a place with a relatively high or a highest resonance amplitude of the vibrating component and the vibrating component vibrates, the bracket 12 will vibrate with the vibrating component. Since the counterweight component 14 and the bracket 12 are movably connected and the counterweight component 14 is heavy, the counterweight component 14 tends to keep still due to the inertial effect of the counterweight component 14. Therefore, relative movement occurs between the bracket 12 and the counterweight component 14, causing the damping material 16 between counterweight component 14 and bracket 12 to flow. The damping material 16 may absorb vibration energy to reduce and even eliminate the vibration of the vibrating component at this place. The heavier the counterweight component 14 is, the stronger is the ability of the counterweight component 14 to keep still due to the inertial effect, and the more possibly the relative movement between the bracket 12 and the counterweight component 14 would occur.

On the other hand, a conventional dynamic vibration absorber generally includes at least a mass block and a spring. Through a dynamic function of the mass block, the force generated by the spring of the vibration absorber on a main system can offset a part or most of the external excitation force applied to the main system to reduce the vibration of the main system, which is equivalent to transferring the vibration energy of the main system to the dynamic vibration absorber. Due to the reliance on the function of the spring, the conventional dynamic vibration absorber is usually configured to absorb the vibration of the natural frequency under a certain vibration mode, i.e., the vibration reduction is restricted to a single vibration mode. In comparison, in a vibration reduction device based on the principles of the present disclosure, the damping material is between the counterweight component and the bracket that can move relative to each other, which allows the vibration reduction device to absorb vibrations of a broadband. In the embodiments of the present disclosure, the vibration reduction device does not need to include a spring and is not restricted to only absorbing or reducing the vibration of the natural frequency under a certain single vibration mode.

In an example embodiment, the vibration reduction device 10 further includes a gap maintaining component 18, the bracket 12 includes at least one first movement plane 121, and the counterweight component 14 includes at least one second movement plane 141. The gap maintaining component 18 allows the first movement plane 121 of the bracket 12 to move relative to the second movement plane 141 of the counterweight component 14 with a pre-set gap. The gap maintaining component 18 is configured to maintain the pre-set gap between the first movement plane 121 of the bracket 12 and the second movement plane 141 of the counterweight component 14, when the first movement plane 121 of the bracket 12 moves relative to the second movement plane 141 of the counterweight component 14.

In an embodiment, the damping material 16 may include a semi-liquid damping material, e.g., a damping grease. The damping material 16 may be between the first movement plane 121 of the bracket 12 and the second movement plane 141 of the counterweight component 14.

Specifically, as shown in FIG. 2, when the bracket 12 vibrates with the vibrating component, the bracket 12 at least moves along the X direction in the figure relative to the counterweight component 14. In the Z direction perpendicular to the X direction, a gap 15 is formed between the counterweight component 14 and the bracket 12. The damping material 16 is filled in the gap 15. The gap maintaining component 18 of the vibration reduction device is configured to maintain the dimension of the gap 15 along the Z direction. When the counterweight component 14 and the bracket 12 move relative to each other, specifically, when the second movement plane 141 of the counterweight component and the first movement plane 121 of the bracket 12 move relative to each other, the gap 15 may be maintained with a pre-set dimension between the second movement plane 141 of the counterweight component 14 and the first movement plane 121 of the bracket 12. A thickness of the damping material 16 filled in the gap 15 is maintained with the pre-set dimension. The damping material 16 with a pre-set thickness may provide a pre-set damping force for the second movement plane 141 of the counterweight component 14 and the first movement plane 121 of the bracket 12 that move relative to each other.

In some embodiments, the gap maintaining component 18 may be a rolling component or an elastic component. For example, the rolling component may include at least one of a ball, a needle, or a roller. The elastic component may include a spring or a thin steel sheet, etc.

In the embodiment shown in FIG. 2, the gap maintaining component 18 is the rolling component, the first movement plane 121 of the bracket 12 is provided with a mounting slot 123 to accommodate the rolling component, and the second movement plane 141 of the counterweight component 14 is provided with a mounting slot 143 to accommodate the rolling component. The mounting slot 123 and the corresponding mounting slot 143 cooperate to form a receiving part for receiving or accommodating the rolling component. To form the gap 15, along the Z direction, the mounting slot 123 has a first depth (i.e., recessed dimension), the corresponding mounting slot 143 has a second depth (i.e., recessed dimension), the rolling component has a first thickness, and the first thickness of the rolling component is larger than the sum of the first depth and the second depth. The difference between the first thickness of the rolling component and the sum of the first depth and the second depth forms the pre-set dimension of the gap 15.

In some other embodiments, the mounting slot may be arranged to one of the first movement plane 121 of the bracket 12 and the second movement plane 141 of the counterweight component 14 for accommodating the rolling component, i.e., the mounting slot 123 is only arranged at the first movement plane 121 of the bracket 12 for accommodating the rolling component, or the mounting slot 143 is only arranged at the second movement plane 141 of the counterweight component 14 for accommodating the rolling component. The rolling component may be arranged in the mounting slot 123 or the mounting slot 143, and the first thickness of the rolling component is larger than the first depth of the mounting slot 123 or the second depth of the mounting slot 143. The gap 15 may still be formed between the first movement plane 121 and the second movement plane 141 through this manner, and the difference between the first thickness of the rolling component and the first depth or the second depth forms the pre-set dimension of the gap 15.

The inventors found through research that, when the pre-set dimension (i.e., pre-set gap) of the gap 15 falls in the range of 0.2-2 mm, the damping material 16 in the gap 15 may provide the damping force that satisfies pre-set requirements. Further, to precisely control the damping force generated by the damping material 16, the damping material 16 may be filled merely in the gap 15 between the bracket 12 and the counterweight component 14 along the Z direction.

In some embodiments, the gap maintaining component 18 may be arranged between the bracket 12 and the counterweight component 14. For example, when the gap maintaining component 18 is the rolling component, the rolling component may be between the first movement plane 121 of the bracket 12 and the second movement plane 141 of the counterweight component 14.

In some other embodiments, for example, when the gap maintaining component 18 is the elastic component (e.g., springs, or thin steel sheet), the elastic component may be arranged in positions other than the position between the first movement plane 121 of the bracket 12 and the second movement plane 141 of the counterweight component 14, as long as the elastic component can maintain the gap 15 between the first movement plane 121 and the second movement plane 141. Similar to the rolling component described above, the elastic component is configured to maintain the gap 15 between the first movement plane 121 and the second movement plane 141 to ensure the damping force provided by the damping material 16 in the gap 15 satisfies the pre-set requirements.

With further reference to FIG. 2, the bracket 12 includes at least one protrusion 122, the counterweight component 14 is provided with a chamber, and the chamber is configured to accommodate at least one part of the protrusion. For example, the counterweight component 14 includes a first counterweight member 142 and a second counterweight member 144, and the first counterweight member 142 and the second counterweight member 144 are connected to form the chamber.

The first movement plane 121 may be formed at the protrusion 122 of the bracket 12, the second movement plane 141 may formed at the inner wall of the chamber of the counterweight component 14, and the gap maintaining component 18 allows the first movement plane 122 formed at the protrusion 122 and the second movement plane 144 formed at the inner wall of the chamber to move relative to each other with the pre-set gap. The bracket 12 further includes a mounting member 124 connected to the protrusion 122 and is mounted at the vibrating component through the mounting member 124.

Specifically, as shown in FIG. 2, the bracket 12 includes two protrusions 122, and the vibration reduction device 10 includes two counterweight components 14. The two protrusions 122 extend from the mounting member 124 along the X direction, and the two counterweight components 14 are arranged at the ends of the two protrusions 122 away from the mounting member 124, respectively. The two protrusions 122 and the respective two counterweight components 14 form a symmetrical structure symmetrical about the mounting member 124.

Each protrusion 122 forms a cantilever structure and, as shown in the figure, each protrusion 122 has two first movement planes 121. Each counterweight component 14 includes the first counterweight member 142 and the second counterweight member 144. The surface of the first counterweight member 142 facing the first movement plane 121 forms a second movement plane 141, and the surface of the second counterweight member 144 facing the other first movement plane 121 forms another second movement plane 141. A gap 15 is formed between one first movement plane 121 and one corresponding second movement plane 141, and the damping material 16 is filled in the gap 15. Another gap 15 is formed between the other first movement plane 121 and the corresponding second movement plane 141, and the damping material 16 is also filled in the other gap 15. With the damping material 16 filled to both sides of the protrusion 122, the damping force may be better provided for the relative movement of the bracket 12 and the counterweight component 14 to achieve the better effect of vibration reduction.

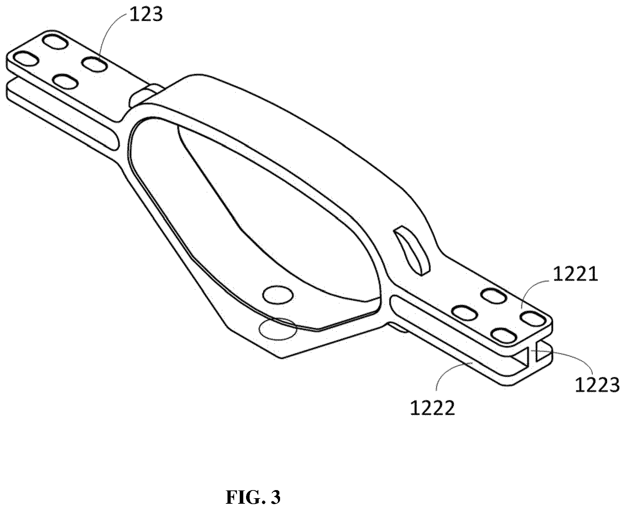

FIG. 3 is a schematic diagram showing a portion of a bracket 12 according to an example embodiment of the disclosure. As shown in FIG. 3, the protrusion 122 has an "I" shape cantilever structure. The protrusion 122 has two flat sections 1221 and 1222 and a vertical spacer 1223 between the two flat sections. The two first movement planes 121 are formed at the two flat sections 1221 and 1222, respectively, and the mounting slots 123 are formed at the first movement planes 121. With the "I" shape structure, not only the bracket has a high rigidity, but also the weight of the bracket is reduced as much as possible, so that more weight is allotted to the counterweight component to facilitate the relative movement between the bracket and the counterweight component.

It is to be understood that the mounting member 124 of the bracket 12 may be formed with various structures that can appropriately match the vibrating component. In the embodiment shown in the figure, the mounting member 124 is formed as a closed structure with a rounded triangle shape to surround and be connected with the vibrating component.

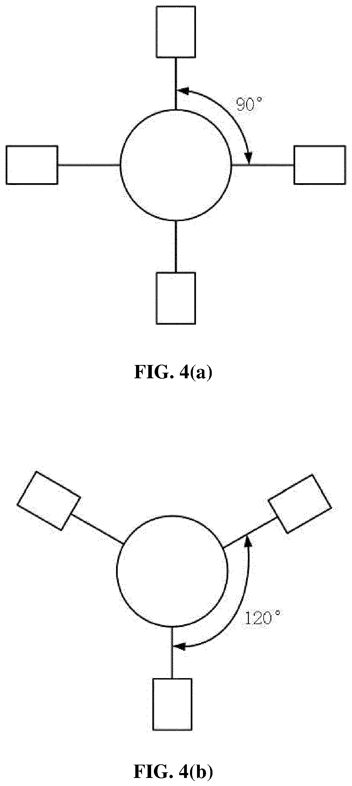

In some other embodiments, the vibration reduction device 10 may include more (e.g., more than two) counterweight components 14. The plurality of counterweight components 14 are symmetrically distributed and movably connected to the bracket 12. For example, as shown in FIG. 4(a), in which the circle pattern schematically represents the mounting member of the bracket and the rectangle patterns schematically represent the counterweight components 14, the vibration reduction device includes four counterweight components 14, and each two adjacent counterweight components 14 is 90° apart. As another example, as shown in FIG. 4(b), the vibration reduction device includes three counterweight components 14, and each two adjacent counterweight components 14 are 120° apart. Through such distribution manners, when the vibration reduction device is mounted at the vibrating component vibrating along a plurality of directions, the bracket can move along the plurality of directions relative to the counterweight components to reduce the vibrations of the vibrating component.

Referring again to FIG. 2, the bracket 12 further includes a lock member 126, and the lock member 126 is configured to lock the mounting member 124 at the vibrating component. In one embodiment, the lock member 126 includes an operation component 1262 and an engagement component 1264. The engagement component 1264 is configured to engage with the vibration reduction component, and the operation component 1262 can be operated so that the engagement component 1264 releases and/or locks the vibration reduction component.

In one embodiment, the engagement component 1264 may have an arc shape to be suitable for engaging with a shaft of the vibrating component.

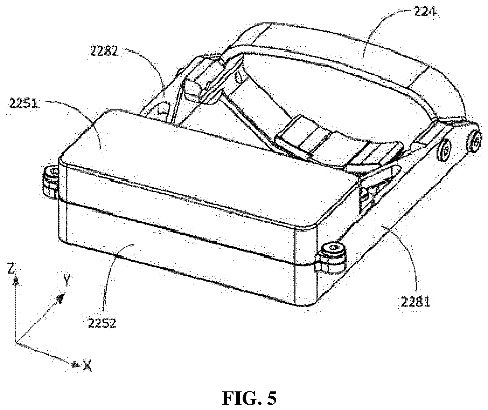

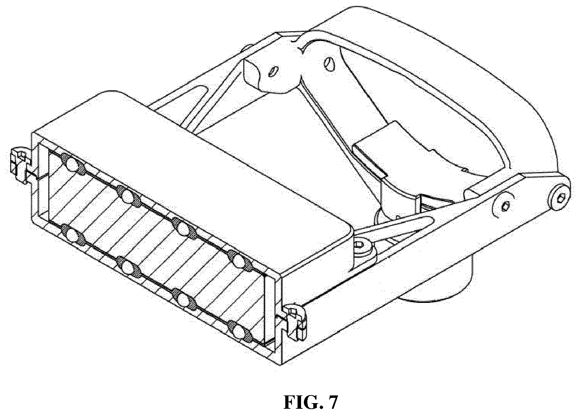

FIGs. 5-8 are schematic diagrams of a vibration reduction device 20 according to another example embodiment of the present disclosure. As shown in FIGs. 5-8, the vibration reduction device 20 includes a bracket 22, a counterweight component 24, and a damping material 26. The bracket 22 may be mounted at any vibrating component, and the counterweight component 24 is movably connected to the bracket 22. When the bracket 22 is subject to vibration, the counterweight component 24 may move relative to the bracket 22 drive the damping material 26 between the counterweight component 24 and the bracket 22 to flow.

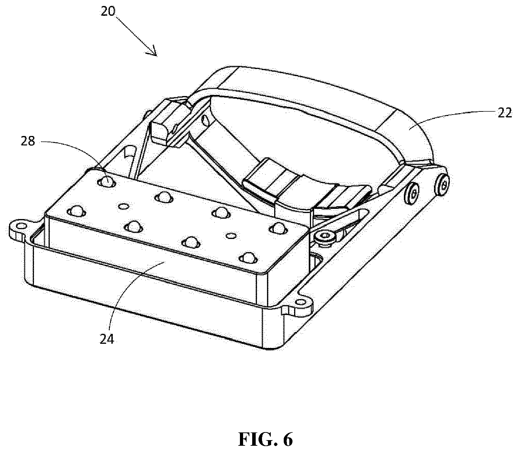

As shown in FIG. 6, the bracket 22 is configured with a receiving chamber, the receiving chamber accommodates at least a part of the counterweight component 24. In the embodiments shown in the figure, the receiving chamber accommodates the whole counterweight component 24.

In an example embodiment, the vibration reduction device 20 further includes a gap maintaining component 28. The bracket 22 includes at least one first movement plane 221, the counterweight component 24 include at least one second movement plane 241, and the gap maintaining component 28 allows the first movement plane 221 of the bracket 22 to move relative to the second movement plane 241 of the counterweight component 24 with a pre-set gap.

In the embodiment shown in the figure, the first movement plane 221 is formed at the inner wall of the receiving chamber of the bracket 22, the second movement plane 241 is formed at the surface of the counterweight component 24 facing the inner wall, and the gap maintaining component 28 allows the first movement plane 221 at the inner wall of the receiving chamber to move relative to the second movement plane 241 at the counterweight component 24 with the pre-set gap.

In one embodiment, the damping material 26 may include a semi-liquid damping material, e.g., a damping grease. The damping material 26 may be between the first movement plane 221 of the bracket 22 and the second movement plane of the counterweight component 24.

In some embodiments, the bracket 22 may include a first cover 2251 and a second cover 2252, where the first cover 2251 and the second cover 2252 are connected to form a receiving chamber. The bracket 22 may further include a sealing component, so that the counterweight component 24 may be sealed and accommodated in the receiving chamber to prevent the damping material 26 from contamination of external moisture, dust, etc.

In one embodiment, the first cover 2251 and the second cover 2252 may be connected removably, for example, connected through bolts, screws, etc., so that the first cover 2251 and the second cover 2252 may be separated to open the receiving chamber, or be engaged to close the receiving chamber.

The bracket 22 may include a mounting member 224, which is configured to mount the bracket 22 at the vibrating component. The second cover 2252 may include at least one support arm, for example, two support arms 2281 and 2282, and both support arms 2281 and 2282 are connected to the mounting member 224.

The shape of the mounting member 224 may be similar with the shape of the mounting member 124, which is not described in detail here.

In one embodiment, the second cover 2252 and the support arms 2281 and 2282 may be integrated into one, the support arms 2281 and 2282 are connected to the mounting member 224 with bolts, etc. As shown in the figure, the second cover 2252 and two support arms 2281 and 2282 may form a "C" shape structure, the mounting member 224 may be sandwiched between the openings of the "C" shape structure.

In the embodiment, the gap maintaining component 28 may be a rolling component or an elastic component. For example, the rolling component may include at least one of a ball, a needle, and a roller. The elastic component may include a spring or a thin steel sheet, etc.

In the embodiment, shown in the figure, the gap maintaining component 28 is the rolling component, the first movement plane 221 of the bracket is configured with a mounting slot to accommodate the rolling component, the second movement plane 241 of the counterweight component 24 is configured with a mounting slot to accommodate the rolling component. The mounting slot at the first movement plane 221 and the mounting slot at the second movement plane 241 corporate to form a receiving component to receive or accommodate the one rolling component. To form the gap 25, along the Z direction, the mounting slot at the first movement plane 221 has a first depth (i.e., recessed dimension), the mounting slot at the second movement plane 241 has a second depth (i.e., recessed dimension), the rolling component may have a first thickness, the first thickness of the rolling component is larger than the sum of the first depth and the second depth. The difference between the first thickness of the rolling component and the sum of the first depth and the second depth forms the pre-set dimension of the gap 25.

In some other embodiments, the mounting slot may be arranged at one of the first movement plane 221 of the bracket 22 and the second movement plane 241 of the counterweight component 24 for accommodating the rolling component, i.e., the mounting slot is only arranged at the first movement plane 221 of the bracket 22 for accommodating the rolling component, or the mounting slot is only arranged at the second movement plane 241 of the counterweight component 24 for accommodating the rolling component. The rolling component may be arranged in the mounting slot at the bracket or in the mounting slot at the counterweight component, and the first thickness of the rolling component is larger than the first depth of the mounting slot at the bracket or the second depth of the mounting slot at the counterweight component. The gap 25 may still be formed between the first movement plane 221 and the second movement plane 241 through this manner, and the difference between the first thickness of the rolling component and the first depth or the second depth forms the pre-set dimension of the gap 25.

The inventors found through research that, when the pre-set dimension (i.e., pre-set gap) of the gap 25 falls in the range of 0.2-2 mm, the damping material 26 in the gap 25 may provide the damping force to satisfy the pre-set requirements. To precisely control the damping force generated by the damping material 26, the damping material 26 may only be filled in the gap 25 between the bracket 22 and the counterweight component 24 along the Z direction, but not filled in the other gaps between the bracket 22 and the counterweight component 24.

In some embodiments, the gap maintaining component 28 may be between the bracket 22 and the counterweight component 24. For example, when the gap maintaining component 28 is the rolling component, the rolling component may be between the first movement plane 221 at the bracket 22 and the second movement plane 241 at the counterweight component 24.

In some other embodiments, for example, when the gap maintaining component 28 is the elastic component (e.g., spring, or thin steel sheet), the elastic component may be arranged in positions other than the position between the first movement plane 221 at the bracket 22 and the second movement plane 241 at the counterweight component 24, as long as the elastic component may maintain the gap 25 between the first movement plane 221 and the second movement plane 241.

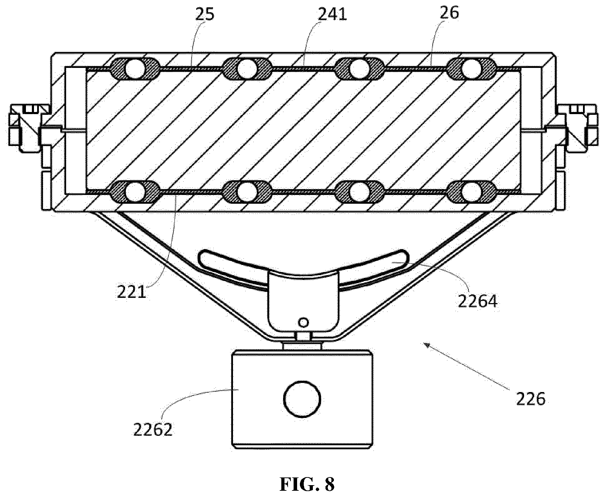

Specifically, the two first movement planes 221 at the bracket 22 are formed at the inner surface of the first cover 2251 facing the counterweight component 24 and at the inner surface of the second cover 2252 facing the counterweight component 24, respectively. The two surfaces of counterweight component 24 facing the two first movement planes 221 (i.e., as shown in FIG. 8 the upper top and bottom surfaces of the counterweight component 24) forms the two second movement planes 241, respectively. One first movement plane 221 (e.g., the inner surface of the first cover 2051) and one corresponding second movement plane 241 (e.g., the top surface of the counterweight component 24) form the gap 25, and the damping material is filled in the gap 25. The other first movement plane 221 (e.g., the inner surface of the second cover 2052) and another corresponding second movement plane 241 (e.g., the bottom surface of the counterweight component 24) form the other gap 25, and the damping material 26 is also filled in the other gap 25. With the damping material 26 filled to the top and bottom two sides of the one counterweight component 24, the damping force may be better provided for the relative movement of the bracket 22 and the counterweight component 24 to achieve the better effect of the vibration reduction.

In some embodiments, when the gap maintaining component 28 is a ball, at least three balls may be arranged between the first movement plane 221 and the corresponding second movement plane 241. Since three balls can determine a plane, a consistent gap between the whole first movement plane 221 and the corresponding second movement plane 241 can be ensured. In the embodiment shown in the figure, for example, eight balls are arranged between the first movement plane 221 and the corresponding second movement plane 241. When the gap maintaining component 28 is the needle or the roller, at least three needles or rollers may be provided, and the consistent gap between the whole first movement plane 221 and the corresponding second movement plane 241 may still be ensured to be formed.

Referring again to FIG. 8, the bracket 22 further includes a lock member 226, and the lock member 226 is configured to lock the mounting member 224 at the vibrating component. In one embodiment, the lock member 226 includes an operation component 2262 and an engagement component 2264. The engagement component 2264 is configured to engage with the vibration reduction component, and the operation component 2262 is operated so that the engagement component 2264 releases and/or locks the vibration reduction component.

The vibration reduction devices 10 and 20 consistent with embodiments of the disclosure are described above in connection with the figures. Hereinafter, the embodiments of the disclosure are further described in connection with specific application scenarios.

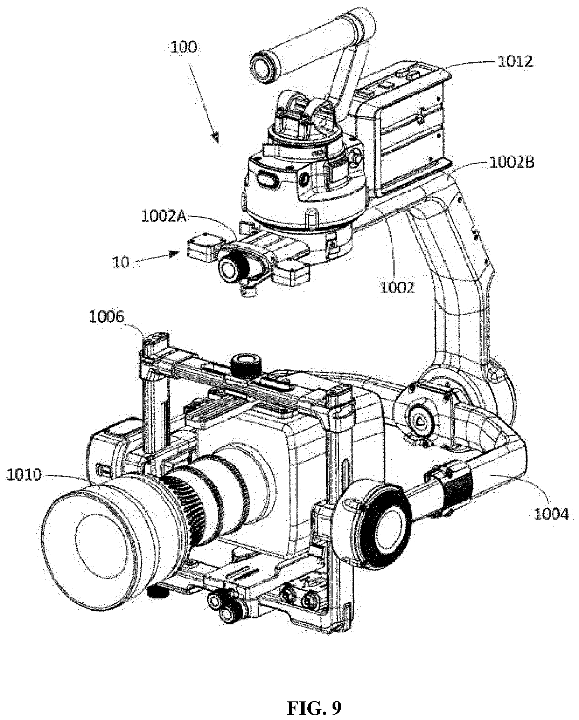

In embodiments of the present disclosure, the vibration reduction device 10 is mounted at the gimbal 100, as shown in FIG. 9. The gimbal 100 includes at least a yaw axis arm 1002 and a load support component. The load support component includes at least one of a roll axis arm or a pitch axis arm connected to the roll axis arm. In the embodiment shown in the figure, the load support component includes a roll axis arm 1004 and a pitch axis arm 1006 connected to the roll axis arm 1004. The load support component is configured to carry a load, e.g., a camera 1010. For other structure of the gimbal 100, reference can be made to the gimbal structure of the existing technology, which is not described here.

The inventors found through research that, when the gimbal 100 is used for photographing, the yaw axis arm 1002 has large vibration amplitude, and the phenomena with large vibration amplitude is especially obvious at an end 1002A of the yaw axis arm 1002 away from the load support component. In some embodiments of the present disclosure, as shown in FIG. 9, the vibration reduction device 10 is mounted at the yaw axis arm 1002. Specifically, the load support component is arranged at an end 1002B of the yaw axis arm 1002, the vibration reduction device 10 is mounted at the other end 1002A of the yaw axis arm 1002 away from the load support component. By this configuration, the vibration reduction device 10 may better absorb or reduce, even eliminate the vibration of the yaw axis arm 1002. Specifically, since the vibration reduction device 10 is mounted at the end 1002A, the vibration reduction device 10 may fully absorb or reduce, even eliminate, the vibration at the end of the yaw axis arm 1002, so that the problem of the large vibration amplitude of the yaw axis arm is solved. The vibration reduction device 10 may minimize, even eliminate the vibration of the gimbal 100 with the large vibration amplitude to achieve the better vibration reduction and improve the photographing quality of images.

Since the gimbal has the multi-frame tandem structure and the gimbal has many vibration modes, in embodiments of the present disclosure, the vibration reduction device is especially suitable for the gimbal. The vibration reduction device may reduce the resonance amplitude of the natural frequencies under the plurality of vibration modes to provide an effective vibration reduction effect for the gimbal.

In some embodiments, the gimbal 100 further includes a balance adjustment device 1012 at the yaw axis arm. In some embodiments, the balance adjustment device at the yaw axis arm 1012 may be configured to mount batteries, i.e., to form a battery station. The vibration reduction device 10 arranged at the yaw axis arm 1002 and the balance adjustment device 1012 may be arranged at two sides of the yaw axis arm, respectively, i.e., two sides of the yaw axis. The balance of the yaw axis arm is better achieved, and the balance of the gimbal is better ensured.

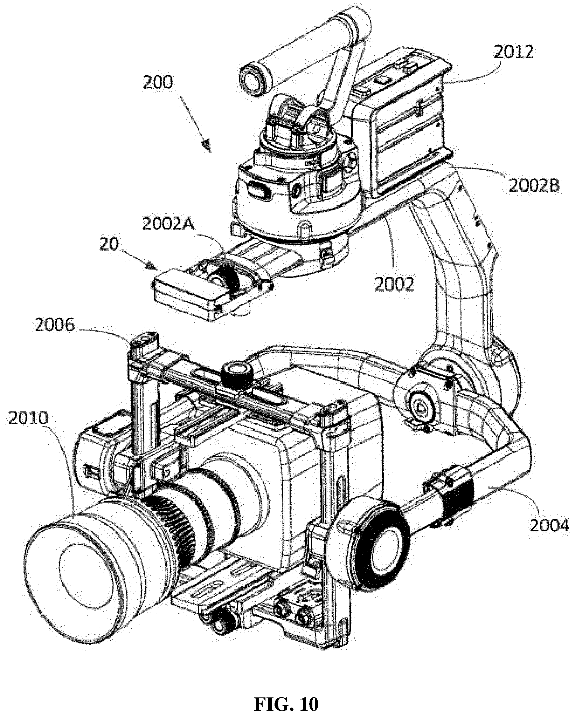

In another embodiment, the vibration reduction device 20 is mounted at a gimbal 200, as shown in FIG. 10. The gimbal 200 includes at least a yaw axis arm 2002 and a load support component. The load support component includes at least one of a roll axis arm or a pitch axis arm connected to the roll axis arm. In the embodiment shown in the figure, the load support component includes a roll axis arm 2004 and a pitch axis arm 2006 connected to the roll axis arm 2004. The load support component is configured to carry a load, e.g., a camera 2010. For other structure of the gimbal 200, reference can be made to the gimbal structure of the existing technology, which is not described here.

The inventors found through research that, when the gimbal 200 is used for photographing, the vibration amplitude of the yaw axis arm 2002 is relatively large, and the phenomena of the large vibration amplitude is obvious at an end 2002A of the yaw axis arm 2002 away from the load support component. In some embodiments of the present disclosure, as shown in FIG. 10, the vibration reduction device 20 is mounted at the yaw axis arm 2002. Specifically, the load support component is arranged at an end 2002B of the yaw axis arm 2002, and the vibration reduction device 20 is mounted at the other end 2002A of the yaw axis arm 2002 away from the load support component. With this configuration, the vibration reduction device 20 may better absorb or reduce, even eliminate, the vibration of the yaw axis arm 2002. Since the vibration reduction device 20 is arranged at the end 2002A, the vibration reduction device may fully absorb or reduce, even eliminate the vibration at the end of the yaw axis arm 2002, and the problem of the large vibration amplitude of the yaw axis arm is solved. The vibration reduction device 20 may minimize, even eliminate the vibration of the gimbal 200 with the large vibration amplitude to achieve the better vibration reduction and improve the photographing quality of images.

Since the gimbal has the multi-frame tandem structure and the gimbal has many vibration modes, in embodiments of the present disclosure, the vibration reduction device is especially suitable for the gimbal to reduce the resonance amplitude of the natural frequencies under the plurality of vibration modes and provide an effective effect for the vibration reduction.

In some embodiments, the gimbal 200 further includes a yaw axis arm balance adjustment device 2012. In some embodiments, the yaw axis arm balance adjustment device 2012 may also be configured to mount batteries, i.e., to form a battery station. The vibration reduction device 20 arranged at the yaw axis arm 2002 and the balance adjustment device 2012 may be arranged at the two sides of the yaw axis arm, respectively, i.e., the two sides of the axis of the yaw axis arm. In this way, the balance of the yaw axis arm may be better achieved, and the balance of the gimbal is better ensured.

In accordance with some other embodiments, there is provided a gimbal system, and the gimbal system includes the gimbal 100, 200 described above and the vibration reduction device 10, 20 described above.

In one embodiment, the gimbal system may include at least two of the vibration reduction device 10, 20, and at least one of the at least two of the vibration reduction device 10, 20 is mounted at the yaw axis arm 1002, 2002.

In another embodiment, the gimbal system may include three of the vibration reduction device 10, 20, and the three of the vibration reduction device 10, 20 are mounted at the yaw axis arm 1002/2002, the roll axis arm 1004/2004, and the pitch axis arm 1006/2006, respectively.

In accordance with the embodiments above, with the vibration reduction device mounted at the gimbal, the vibration amplitudes of the plurality of vibration modes may be reduced in the broadband range, the active vibration suppression performance of the gimbal is improved, and the sensitivity to the vibration disturbance of the gimbal is reduced.

Although the present disclosure is described with reference to the specific example embodiments, one of ordinary skill in the art should understand that various changes to the form and the detail of the present disclosure may be implemented without departing from the spirit and scope of the disclosure as defined by the claims and their equivalents. The scope of the present disclosure is not limited to the embodiments above but determined by the claims and also determined by the equivalents of the claims.

## Claims

1. A vibration reduction device for a gimbal comprising a counterweight component, a bracket, and a damping material, wherein:
the bracket is mounted at the gimbal;
the counterweight component and the bracket are movably connected; and
when the bracket is subject to vibration, the counterweight component and the bracket move relative to each other to drive the damping material between the counterweight component and the bracket to flow.

2. The vibration reduction device of claim 1, wherein the bracket is mounted at a yaw axis arm of the gimbal.

3. The vibration reduction device of claim 2, wherein the bracket is mounted at an end of the yaw axis arm away from a roll axis arm of the gimbal.

4. The vibration reduction device of any of claims 1-3, wherein the damping material includes damping grease.

5. The vibration reduction device of any of claims 1-4, wherein:
the vibration reduction device further includes a gap maintaining component;
the bracket includes at least one first movement plane;
the counterweight component includes at least one second movement plane; and
the gap maintaining component allows the first movement plane of the bracket to move relative to the second movement plane of the counterweight component with a pre-set gap.

6. The vibration reduction device of claim 5, wherein the gap maintaining component is a rolling component or an elastic component.

7. The vibration reduction device of claim 6, wherein when the gap maintaining component is the rolling component, a mounting slot is configured at the at least one of the first movement plane of the bracket and/or at least one of the second movement plane of the counterweight component for accommodating the rolling component.

8. The vibration reduction device of claim 6 or 7, wherein the rolling component includes at least one of a ball, a needle, or a roller.

9. The vibration reduction device of any of claims 5-8, wherein the damping material is between the first movement plane of the bracket and the second movement plane of the counterweight component.

10. The vibration reduction device of any of claims 5-9, wherein:
the bracket includes at least one protrusion;
the counterweight component is configured with a chamber;
the chamber accommodates at least a part of the protrusion;
the first movement plane is formed at the protrusion of the bracket;
the second movement plane is formed at an inner wall of the chamber of the counterweight component; and
the gap maintaining component allows the first movement plane formed at the protrusion to move relative to the second movement plane formed at the inner wall of the chamber with the pre-set gap.

11. The vibration reduction device of claim 10, wherein the counterweight component includes a first counterweight member and a second counterweight member, and the first counterweight member and the second counterweight member are connected to form the chamber.

12. The vibration reduction device of claim 10 or 11, wherein the bracket includes a mounting member connected to the protrusion, and the bracket is mounted at the gimbal through the mounting member.

13. The vibration reduction device of any of claims 5-9, wherein:
the bracket is configured with a receiving chamber and the receiving chamber receives at least a part of the counterweight component;
the first movement plane is formed at an inner wall of the receiving chamber of the bracket; and
the gap maintaining component allows the first movement plane formed at the inner wall of the receiving chamber to move relative to the second movement plane of the counterweight component with the pre-set gap.

14. The vibration reduction device of claim 13, wherein the counterweight component is sealed and received in the receiving chamber.

15. The vibration reduction device of claim 13 or 14, wherein the bracket includes a first cover and a second cover, and the first cover and the second cover are connected to form the receiving chamber.

16. The vibration reduction device of the claim 15, wherein:
the bracket includes the mounting member;
the second cover further includes at least one support arm;
the support arm is connected to the mounting member; and
the bracket is mounted at the gimbal through the mounting member.

17. The vibration reduction device of claim 12 or 16, wherein the bracket further includes a lock member, and the lock member is configured to lock the mounting member at the gimbal.

18. The vibration reduction device of any of claims 1-17, wherein the vibration reduction device includes a plurality of counterweight components.

19. The vibration reduction device of claim 18, wherein the plurality of counterweight components are symmetrically distributed and movably connected to the bracket.

20. A gimbal system comprising a gimbal and a vibration reduction system, wherein:
the gimbal includes a yaw axis arm and a load support component;
the load support component is arranged at an end of the yaw axis arm; and
the vibration reduction device is mounted at another end of the yaw axis arm away from the load support component.

21. The gimbal system of claim 20, wherein the vibration reduction device is configured to absorb or reduce a vibration of the yaw axis arm.

22. The gimbal system of claim 20 or 21, wherein the load support component includes at least one of a roll axis arm or a pitch axis arm connected to the roll axis arm.

23. The gimbal system of any of claims 20-22, wherein the vibration reduction device includes a counterweight component, a bracket, and a damping material, wherein:
the bracket is mounted at the gimbal;
the counterweight component is movably connected to the bracket; and
when the bracket is subject to vibration, the counterweight component and the bracket move relative to each other to drive the damping material between the counterweight component and the bracket to flow.

24. The gimbal system of claim 23, wherein the damping material includes damping grease.

25. The gimbal system of claim 23 or 24, wherein the vibration reduction device further includes a gap maintaining component, wherein:
the bracket includes at least one first movement plane;
the counterweight component includes at least one second movement plane; and
the gap maintaining component allows the first movement plane of the bracket to move relative to the second movement plane of the counterweight component with a pre-set gap.

26. The gimbal system of claim 25, wherein the gap maintaining component is a rolling component or an elastic component.

27. The gimbal system of claim 26, wherein the gap maintaining component is the rolling component, and a mounting slot is configured at the at least one first movement plane of the bracket and/or at the at least one second movement plane of the counterweight component for accommodating the rolling component.

28. The gimbal system of claim 26 or 27, wherein the rolling component includes at least one of a ball, a needle, or a roller.

29. The gimbal system of any of claims 25-28, wherein the damping material is between the first movement plane of the bracket and the second movement plane of the counterweight component.

30. The gimbal system of any of claims 25-29, wherein the bracket includes at least one protrusion, the counterweight component is configured with a chamber, and the chamber accommodates at least a part of the protrusion, wherein:
the first movement plane is formed at the protrusion of the bracket;
the second movement plane is formed at the inner wall of the chamber of the counterweight component; and
the gap maintaining component allows the first movement plane formed at the protrusion and the second movement plane formed at the inner wall of the chamber to move relative to each other with the pre-set gap.

31. The gimbal system of claim 30, wherein, the counterweight component includes a first counterweight member and a second counterweight member, wherein the first counterweight member and the second counterweight member are connected to form the chamber.

32. The gimbal system of claim 30 or 31, wherein the bracket includes a mounting member connected to the protrusion, and the bracket is mounted at the gimbal through the mounting member.

33. The gimbal system of any of claims 25-29, wherein:
the bracket is configured with a receiving chamber;
the receiving chamber accommodates at least a part of the counterweight component;
the first movement plane is formed at an inner wall of the receiving chamber of the bracket; and
the gap maintaining component allows the first movement plane formed at the inner wall of the receiving chamber and the second movement plane of the counterweight component to move relative to each other with the pre-set gap.

34. The gimbal system of claim 33, wherein the counterweight component is sealed and accommodated in the receiving chamber.

35. The gimbal system of claim 33 or 34, wherein the bracket includes a first cover and a second cover, and the first cover and the second cover are connected to form the receiving chamber.

36. The gimbal system of claim 35, wherein:
the bracket includes a mounting member;
the second cover includes at least one support arm;
the support arm is connected to the mounting member;
the bracket is mounted at the gimbal through the mounting member.

37. The gimbal system of claim 32 or 36, wherein the bracket further includes a lock member, the lock member is configured to lock the mounting member at the gimbal.

38. The gimbal system of any of claims 23-37, wherein the vibration reduction device includes a plurality of counterweight components.

39. The gimbal system of claim 38, wherein the plurality of counterweight components are symmetrically distributed and movably connected to the bracket.
